# EUROPÄISCHE PATENTSCHRIFT

(11) **EP 3 743 628 B1**
(45) Veröffentlichungstag und Bekanntmachung des Hinweises auf die Patenterteilung: **22.02.2023**
(21) Anmeldenummer: 19703251.9
(22) Anmeldetag: 23.01.2019
(51) Int. Cl.: F16B 2/12, F16B 5/06, F16L 3/12, H02G 3/32, F16B 5/12

(54) **BEFESTIGUNGSSYSTEM FÜR EINEN WULSTFLACHSTAHL**
SECURING SYSTEM FOR BULB FLAT STEEL
SYSTÈME DE FIXATION POUR ACIER PLAT À BOUDIN

(30) Priorität: 23.01.2018 DE 102018101464
(43) Veröffentlichungstag der Anmeldung: 02.12.2020
(73) Patentinhaber: MÜPRO Services GmbH, 65719 Hofheim am Taunus (DE)
(72) Erfinder: SCHEINBERGER, Marcus, 65719 Hofheim (DE); ALT, Janosch, 65207 Wiesbaden (DE)
(74) Vertreter: Boult Wade Tennant LLP
(86) Internationale Anmeldenummer: PCT/EP2019/051639
(87) Internationale Veröffentlichungsnummer: WO 2019/145364

(56) Entgegenhaltungen:
- DE-A1- 19 906 669
- DE-U1- 7 605 586
- DE-U1-202010 016 744
- JP-U- S51 124 574

## Beschreibung

Die Erfindung betrifft ein Befestigungssystem mit einem Klemmkörper, einem Wulstflachstahl und wenigstens einer Klemmschraube, die in ein Innengewinde in einer Rückwand des Klemmkörpers eingreift und einen Wulst des Wulstflachstahles mit ihrem Schaftende in einer der Wulstform angepassten Ausnehmung des Klemmkörpers verklemmt, so dass die Last des an dem Wulstflachstahl hängenden Klemmkörpers formschlüssig an den Wulstflachstahl abgeleitet wird.

Gegenstand der vorliegenden Erfindung ist eine Klemme mit einem Klemmkörper zur Anbringung an einem Wulstflachstahl mit einer rinnenartigen Ausnehmung zur Aufnahme eines Wulstes des Wulstflachstahles und einer Rückwand mit einem Innengewinde, in welches eine Klemmschraube eingreift, sowie einem Schutzblech, das drehstarr und mit Bezug auf die Schraubenlängsachse axial verschieblich an dem Klemmkörper gehalten ist, wobei das Schutzblech in den Klemmweg der Klemmschraube ragt. Mit einem solchen Klemmkörper lässt sich das vorstehend beschriebene Befestigungssystem an jedem bereits vorhandenen Wulstflachstahl realisieren.

Ein derartiges Befestigungs- oder Installationssystem ist beispielsweise aus der DE 20 2010 016 744 U1 bekannt. Solche Befestigungssysteme dienen zum Beispiel dazu, an einem Wulstflachstahl, der auch als Hollandprofil (Abkürzung HP) bekannt ist und beispielsweise im Schiffsbau eingesetzt wird, Lasten hängend zu verankern. Wesentliches Bauteil hierbei ist ein Klemmkörper, der schuhartig ausgebildet ist und den Wulstbereich des Wulstflachstahles umgreift, wobei die Klemmschraube, die an der Rückwand des Klemmkörper in ein Gewinde eingreift, den Wulst in eine rinnenartige Ausnehmung des Klemmkörper drückt. Dadurch wird er positioniert und fixiert. Der Abstand zwischen der Rückwand und dem Rand dieser Ausnehmung ist dabei so gewählt, dass sich der Klemmkörper an jeder beliebigen Stelle des in der Regel bereits eingebauten und beispielsweise mit einem Schiffskörper verbundenen Wulstflachstahles einhängen lässt und nicht von einem Ende des Wulstflachstahles her aufgeschoben werden muss. Der Schraubenschaft drückt mit seiner Stirnseite beim Verklemmen unmittelbar auf den Wulstflachstahl, was aus Festigkeitsgründen auch unproblematisch ist. Allerdings kann der sich unter der Klemmlast drehende Schaft eine an dem Wulststahl vorgesehene Beschichtung oder Lackierung beschädigen, so dass es insbesondere unter den im maritimen Einsatz vorherrschenden aggressiven Umgebungsbedingungen schnell zu einer Korrosion an der Druckstelle kommen kann, die zunächst optisch unansehnlich wirkt und ggf. im fortgeschrittenen Fall auch die Festigkeit der Klemmverbindung beeinträchtigen kann.

Aus der DE 20 2014 103 087 U1 ist eine Vorrichtung zum Befestigen eines Rollos bekannt. Das dortig eingesetzte Klemmelement ist nicht geeignet, Zugkräfte aufzunehmen, weil keine Hinterschneidung zwischen dem Fensterrahmen und dem Klemmstück vorgesehen ist. Die Vorrichtung muss auch paarweise eingesetzt werden, um an dem flachen Fensterrahmen Halt für den dortigen Befestigungszweck zu finden, nämlich das Anbringen einer Führungsschiene.

Die DE 20 2010 008 178 U1 zeigt eine Montagevorrichtung zum Abstützen von Bauelementen bei deren Montage, ist also nur für eine Stützlast und nicht für eine Hängelast konzipiert. Entsprechend ist wiederum keine Hinterschneidung vorgesehen. Das zum Einsatz kommende Klemmelement ist auch nicht drehstarr an dem Befestigungssystem gehalten, was auch nicht notwendig ist, weil es sich bei der dortigen Befestigung unmittelbar an dem abzustützenden Element drehstarr abstützen kann.

Eine Vorrichtung zum Befestigen eines Fahrzeugsitzes ist aus der DE 199 06 669 A1 bekannt. Dort wird an einer bodennahen Klemmschiene ein Klemmbügel eines Fahrzeugsitzes aufgelagert.

Die Aufgabe der Erfindung besteht darin, eine Klemme der eingangs genannten Art dahingehen zu verbessern, dass eine Beschädigung des Wulstflachstahles beim Verklemmen mit dem Klemmkörper sicher vermieden wird.

Erfindungsgemäß wird die Aufgabe dadurch gelöst, dass das Schutzblech als U-förmiger Blechwinkel ausgebildet ist, dessen einer Schenkel zwischen dem Schaftende der Klemmschraube und dem Wulstflachstahl liegt und dessen anderer Schenkel eine Durchgangsbohrung aufweist, durch welche der Schraubenschaft ragt.

Die erfindungsgemäße Lösung bietet den Vorteil, dass das Schutzblech durch die Schraube selbst zusätzlich geführt und stabilisiert ist, so dass ein seitliches Ausweichen des verklemmten Schenkels unter Last erschwert ist.

Vorteilhaft ist, dass die die hohe Klemmkraft übertragende Stirnfläche des Schraubenschaftes nicht auf der Beschichtung oder Lackierung des Wulstflachstahles reibt, sondern auf dem Schutzblech, das zur Vermeidung einer eigenen Korrosion aus einem geeigneten rostfreien Werkstoff bestehen kann, was aber nicht zwingend der Fall sein muss. In jedem Fall bleibt der Schutzüberzug des Wulstflachstahles unversehrt, da das Schutzblech die Klemmkraft ohne eine Relativbewegung zur Oberfläche des Wulstflachstahles beim Anziehen der Klemmschraube übertragen kann.

Gleichwohl bleiben die Klemmkräfte, die das Klemmstück mit seiner Ausnehmung gegen den Wulst des Wulststahlprofils verklemmen, in vollem Umfang erhalten, so dass der formschlüssige Lastabtrag gewahrt bleibt.

Die Klemmrichtung der Klemmschraube liegt vorzugsweise senkrecht zur Lastrichtung, so dass sichergestellt ist, dass sich Lastabtrag und Klemmkraft nicht beeinflussen können.

In einer bevorzugten Ausführungsform der Erfindung ist vorgesehen, dass das Schutzblech im Bereich der Andruckstelle des Schraubenschaftes eine Prägung aufweist, die in Richtung des Wulstflachstahles weist.

Diese Prägung ist in der Regel kreisrund und im Durchmesser an die Stirnfläche des Schraubenschaftes angepasst, so dass sich eine Art Führung ergibt, die verhindert, dass das Schutzblech unter der Klemmlast bei noch fortgesetzter Drehung der Klemmschraube seitlich ausweichen kann.

In einer besonders bevorzugten Ausführungsform der Erfindung ist vorgesehen, dass

Eine weitere Stabilisierung und Führung kann dadurch erreicht werden, dass das Schutzblech an dem Klemmkörper parallel zum Schraubenschaft geführt ist. Das Schutzblech lässt sich damit axial bezüglich der Schraube relativ zum Klemmkörper verlagern.

Eine solche Führung kann bei einem zuvor bereits als mögliche Ausführungsform angesprochenen U-förmigen Schutzblech dadurch ausgebildet sein, dass dieses einen mittleren Abschnitt zwischen den Schenkeln aufweist, der parallel zum Schraubenschaft ausgebildet und in einem Schlitz in der Rückwand des Klemmkörpers geführt ist.

Aus Gründen der Montage und Herstellung kann es von Vorteil sein, dass der Schlitz als seitlich offene, T-förmige Ausnehmung in der Rückwand des Klemmkörpers ausgebildet ist.

In einer noch weiteren, besonders bevorzugten Ausführungsform der Erfindung ist vorgesehen, dass eine vorgespannte Druckfeder vorgesehen ist, die das Schutzblech in einem gelösten Zustand der Klemmschraube gegen den Wulstflachstahl drückt.

Diese Ausführungsform hat den besonderen Vorteil, dass der Klemmkörper nach dem Einhängen auf den Wulst des Wulstflachstahles bereits vorfixiert wird, d.h. zum einen rückt er bereits in seine endgültige Position, in welcher der Wulst des Wulstflachstahles bereits spielfrei an der Innenseite des Profils in der Ausnehmung anliegt, und zum anderen ist der Klemmkörper gegen ein Herunterfallen gesichert, bevor er dann durch Anziehen der Klemmschraube endgültig fixiert wird. Gleichwohl kann die Position des Klemmstückes noch ohne großen Kraftaufwand korrigiert werden.

Ein weiterer Vorteil der Feder besteht darin, dass sie eine Sicherung der Schraube bildet, da die Vorspannkräfte in allen Drehstellungen der Schraube für eine Erhöhung des Reibmoments gegen Verdrehen der Schraube sorgen kann.

Eine besonders zweckmäßige Anordnung der Druckfeder sieht vor, dass diese zwischen einer Unterseite eines Kopfes der Klemmschraube und dem Schenkel des Schutzbleches mit der Durchgangsbohrung angeordnet ist.

Gegenüber einer grundsätzlich ebenfalls möglichen Anordnung innerhalb des Klemmkörpers zwischen dem Klemmschenkel des Schutzbleches und der Rückwand des Klemmkörpers bietet diese Anordnung den Vorteil, dass die Druckfeder von der Klemmschraube geführt wird, so dass sie keine Fehlstellung einnehmen kann. Auch lässt sich anhand der sichtbaren Druckfeder und ihrem Spannzustand gut erkennen, ob die Klemmschraube bereits in den Klemmzustand angezogen worden ist

Um den Klemmkörper besser auf den Wulst aufsetzen oder nach dem Aufsetzen seine Position besser korrigieren zu können, ist in einer bevorzugten Weiterbildung der Erfindung vorgesehen, dass der Schenkel des Schutzbleches mit der Durchgangsbohrung mir einem Griffansatz ausgebildet ist. Hierdurch ist es dem Nutzer möglich, die Druckfeder zu komprimieren und dadurch den Spalt zwischen dem Schutzblech und dem Rand der Ausnehmung zu vergrößern, um den Klemmkörper leicht auf den Wulst des Wulstflachstahles aufsetzen zu können.

Ist der Klemmkörper bereits aufgesetzt, die Klemmschraube aber noch nicht angezogen, kann mittels des Griffansatzes die Klemmkraft zum seitlichen Verschieben des Klemmkörpers reduziert oder durch einen entsprechend großen Stellweg der Klemmkörper auch wieder von dem Wulstflachstahl abgenommen werden.

Schließlich ist zweckmäßigerweise vorgesehen, dass an dem Klemmkörper ein Halteelement angebracht oder angeformt ist. Ein geeignetes Halteelement kann z.B. eine Gewindestange, ein Stahlprofil, eine Stahlschiene oder dergleichen sein, um den gewünschten Gegenstand abschließend an dem Wulststahl mittels des Klemmkörpers anbringen zu können.

Die Halteelemente können in jeder geeigneten Art und Weise an dem Klemmkörper angebracht sein, beispielsweise durch Verschrauben oder Verschweißen, oder auch einstückig mit diesem ausgebildet sein.

Eine noch weitere bevorzugte Ausführungsform der Erfindung sieht vor, dass die Mittelachse der Klemmschraube (16) im Bereich der Ausnehmung (28) angeordnet ist.

Diese Maßnahme, bei der in anderen Worten die Schraubenmittelachse unterhalb des oberen Randes der Ausnehmung in dem Klemmkörper zur Aufnahme des Wulstes liegt, vermeidet die Ausbildung von Kippmomenten nach dem Anziehen der Klemmschraube, aber auch bereits in der vorläufigen Klemmstellung, wenn eine entsprechende Druckfeder zum Aufbauen einer Klemmkraft vorgesehen ist.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: ein Explosionsschaubild des Installationssystems mit allen Einzelteilen ohne den Wulstflachstahl;
- Fig. 2 a-d: Ansichten des fertig montierten Klemmkörpers ohne den Wulstflachstahl;
- Fig. 3: eine Seitenansicht des Installationssystems mit an dem Wulstflachstahl aufgesetztem Klemmkörper;
- Fig. 4: eine Schrägansicht einer Ausführungsform eines Klemmkörpers mit einem alternativen Halteelement.

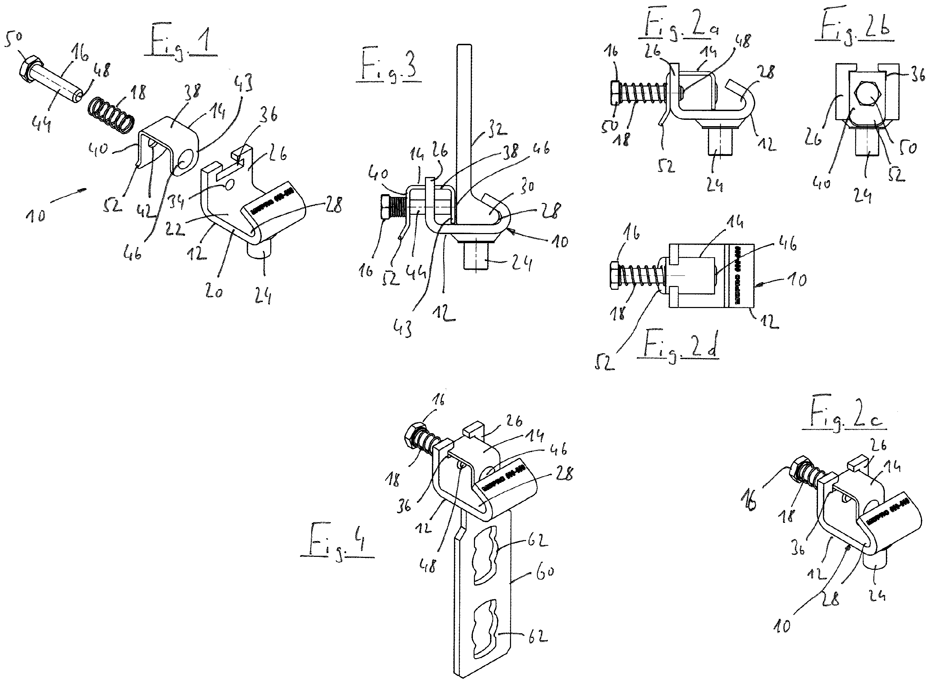

In Fig. 1 ist ein eine Klemme 10 in Einzelteilen gezeigt, wie sie zur Verankerung von Lasten an horizontal angeordneten Wulstflachstählen 32 eingesetzt wird, die beispielsweise im Schiffsbau Verwendung finden. Die hier gezeigte Klemme besteht aus einem Klemmkörper 12, der an die Form des Wulstflachstahles 32 angepasst ist, einem Schutzblech 14, einer Klemmschraube 16 und einer Druckfeder 18.

Der Klemmkörper 12 weist ein Stahlprofil 20 auf, das einen Bodenbereich 22 mit einem daran angeschweißten Befestigungsbolzen 24, eine Rückwand 26 und einen rinnenartigen Abschnitt 28 aufweist, der eine Ausnehmung zur Aufnahme eines Wulstes 30 des Wulstflachstahles 32 bildet (siehe auch Fig. 3). Entsprechend ist die Innenkontur des rinnenartigen Abschnittes 28 der Kontur des Wulstes 30 angepasst, wobei der Wulstflachstahl 32 innen auf dem Bodenbereich 22 anliegen soll.

In der Rückwand 26 des Klemmkörpers 12 ist ein Gewinde 34 vorgesehen, in welches die Klemmschraube 16 eingedreht ist. Die Lage des Gewindes 34 ist so gewählt, dass die Mittelachse der eingedrehten Klemmschraube 16 unterhalb des oberen Randes des rinnenartigen Abschnittes 28, also der Ausnehmung zur Aufnahme des Wulstes 30,liegt.

Das Schutzblech 14 ist in einem T-förmigen Schlitz 36 angeordnet, wobei es einen parallel zur Längserstreckung der in das Gewinde 34 eingedrehten Klemmschraube ausgerichteten Blechabschnitt 38 aufweist, der in dem Schlitz 36 entsprechend parallel zur Klemmschraube 16 geführt ist. An dem Blechabschnitt 38 ist ein erster Schenkel 40 angeformt, der eine Durchgangbohrung 42 aufweist, durch welche die Klemmschraube 16 ragt. Ein zweiter Schenkel 43 ist an dem anderen Ende des Blechschnittes 36 angeformt. Dieser liegt im montierten Zustand der Klemme 10 in der Aufnahme im Klemmkörper 12 und erstreckt sich bis vor den Schraubenschaft 44, so dass dieser sich beim Anziehen der Klemmschraube 16 an den zweiten Schenkel anlegt, der sich nur in der Anziehrichtung der Klemmschraube 16 bewegen soll, aber über den mittleren Blechabschnitt 38 drehstarr an dem Klemmkörper 12 gehalten ist.

In dem zweiten Schenkel ist eine Einprägung 46 vorgesehen, die auf der Angriffsseite des Schaftendes 48 des Schraubenschaftes 44 als Vertiefung ausgebildet ist, so dass sich eine Führung zwischen dem Schraubenschaft 44 und dem zweiten Schenkel 43 des Schutzbleches 14 ergibt. Auf der gegenüberliegenden Seite stellt sich die Einprägung 46 als leichte Erhebung dar, die eine definierte Klemmanlage an dem Wulstflachstahl 32 ausbildet.

Die Druckfeder 18 ist als Schraubenfeder ausgebildet und zwischen dem Kopf 50 der Klemmschraube, der hier als einfacher Sechskantkopf ausgebildet ist, und dem ersten Schenkel 40 des Schutzbleches 14 unter Vorspannung angeordnet. Die Geometrie der Druckfeder 18 ist so gewählt, dass sich auch bei nur über die Höhe des Gewindes 34 eingedrehter Klemmschraube (siehe Fig. 2) noch eine Vorspannung ergibt, die den ersten Schenkel an die Außenseite der Rückwand 26 des Klemmkörpers 12 andrückt. Durch die Klemmkräfte der Feder, die auch im noch nicht angezogenen Zustand der Schraube wirken, erhöhte sich auch das Lösemoment der Schraube durch die Reibkräfte im Gewinde, so dass die Feder auch eine zusätzliche Verdrehsicherung der Schraube gegen ein unbeabsichtigtes Lösen bildet.

Der erste Schenkel 40 weist an seinem freien Ende einen verlängerten Griffansatz 52 in der Form einer leicht abgewinkelten Lasche auf, der ein Verschieben des Schutzbleches gegen die Last der Druckfeder 18 ermöglicht. Nach dem Aufsetzen positioniert die stärker gespannte Druckfeder 18 die Klemme 10 in Bezug auf den Wulstflachstahl 32 und baut auch bereits eine Vorklemmkraft auf, die ein Verrutschen oder Herunterfallen der Klemme 10 sicher verhindert. Zur endgültigen Montage wird dann die Klemmschraube 16 fest angezogen, bis der in Fig. 3 gezeigte endgültige Montagezustand erreicht ist.

Die Zwischenlage des Schutzbleches 14 mit seinem zweiten Schenkel 43 zwischen dem Stirnende 48 des Schraubenschaftes 44 und dem Wulstflachstahl 32 verhindert, dass das Ende unter Last auf einer Beschichtung oder Lackierung des Wulstflachstahles 32 reiben und diesen beschädigen kann. Dadurch wird die Ausbildung von Korrosionsstellen am Wulstflachstahl 32 vermieden, die bei beschädigter Schutzschicht des Wulstflachstahles 32 unvermeidlich sind. Das Schutzblech 14 selbst kann aus einem nicht korrodierenden Material ausgebildet sein, primär geht es aber darum, dass die Schutzschicht des zum Beispiel als Teil der Schiffsstruktur ausgebildeten Wulstflachstahles 32 nicht beschädigt wird.

In dem in Fig. 1 bis 3 gezeigten Ausführungsbeispiel ist zur Verankerung einer Last der bereits erwähnte Bolzen 24 vorgesehen. In Fig. 4 ist als weiteres Beispiel für ein Haltelement ein Flachstahl 60 mit profilierten Löchern 62 vorgesehen, um an diesem eine Last befestigen zu können. Es können aber beliebige andere Halteelemente an dem Klemmkörper 12 angebracht oder gemeinsam mit diesem ausgebildet sein, die für den jeweiligen Lastfall am geeignetsten erscheinen.

Die Erfindung ist nicht auf eine der vorbeschriebenen Ausführungsformen beschränkt, sondern in vielfältiger Weise abwandelbar. So kann zum Beispiel die Druckfeder auch zwischen der Rückwand des Klemmkörpers und dem zweiten Schenkel des Schutzbleches angeordnet sein, um die gewünschte Vorklemmkraft zu erreichen. Das Schutzblech selbst kann auch in anderer Weise an dem Klemmkörper und/oder der Schraube gehalten sein, wesentlich ist dabei nur die Anordnung eines nicht rotierenden Blechteils zwischen dem Schaftende der Klemmschraube und dem zu verklemmenden Wulstflachstahl.

### Bezugszeichenliste

- 10: Klemme
- 12: Klemmkörper
- 14: Schutzblech
- 16: Klemmschraube
- 18: Druckfeder
- 20: Stahlprofil
- 22: Bodenbereich
- 24: Befestigungsbolzen
- 26: Rückwand
- 28: rinnenartige Ausnehmung
- 30: Wulst
- 32: Wulstflachstahl
- 34: Gewinde
- 36: Schlitz
- 38: mittlerer Blechabschnitt
- 40: erster Schenkel
- 42: Durchgangsbohrung
- 43: zweiter Schenkel
- 44: Schraubenschaft
- 46: Einprägung
- 48: Schraubenschaftende
- 50: Klemmschraubenkopf
- 52: Griffansatz
- 60: Flachstahl
- 62: profilierte Löcher

## Patentansprüche

1. Klemme (10) mit einem Klemmkörper (12) zur Anbringung an einem Wulstflachstahl (32) mit einer rinnenartigen Ausnehmung (28) zur Aufnahme eines Wulstes (30) des Wulstflachstahles (32) und einer Rückwand (26) mit einem Gewinde (34), in welches eine Klemmschraube (16) eingreift, sowie einem Schutzblech (14), das drehstarr und mit Bezug auf die Schraubenlängsachse axial verschieblich an dem Klemmkörper (12) gehalten ist, wobei das Schutzblech (14) in den Klemmweg der Klemmschraube (16) ragt, **dadurch gekennzeichnet, dass** das Schutzblech (14) als U-förmiger Blechwinkel ausgebildet ist, dessen einer Schenkel (43) zwischen dem Schaftende (48) der Klemmschraube (16) und dem Wulstflachstahl (32) liegt und dessen anderer Schenkel (40) eine Durchgangsbohrung (42) aufweist, durch welche der Schraubenschaft (44) ragt..

2. Klemme nach Anspruch 1, **dadurch gekennzeichnet, dass** das Schutzblech (14) im Bereich der Andruckstelle des Schraubenschaftes (44) eine Prägung (46) aufweist, die in Richtung des Wulstflachstahles (32) weist.

3. Klemme nach Anspruch 1 oder 2, **dadurch gekennzeichnet, dass** das Schutzblech (14) an dem Klemmkörper (12) parallel zum Schraubenschaft (44) geführt ist.

4. Klemme nach einem der vorhergehenden Ansprüche, **dadurch gekennzeichnet, dass** das U-förmige Schutzblech (14) einen mittleren Abschnitt aufweist, der parallel zum Schraubenschaft (44) ausgebildet und in einem Schlitz (36) in der Rückwand (26) des Klemmkörpers (12) geführt ist.

5. Klemme nach Anspruch 4, **dadurch gekennzeichnet, dass** der Schlitz (36) als seitlich offene, T-förmige Ausnehmung in der Rückwand (26) des Klemmkörpers (12) ausgebildet ist.

6. Klemme nach einem der vorgehenden Ansprüche, **dadurch gekennzeichnet, dass** eine vorgespannte Druckfeder (18) vorgesehen ist, die das Schutzblech (14) auch in einem gelösten Zustand der Klemmschraube (16) gegen den Wulstflachstahl (32) drückt.

7. Klemme nach Anspruch 6, **dadurch gekennzeichnet, dass** die Druckfeder (18) zwischen einer Unterseite eines Kopfes (50) der Klemmschraube (16) und dem Schenkel (40) des Schutzbleches (14) mit der Durchgangsbohrung (42) angeordnet ist.

8. Klemme nach einem der vorhergehenden Ansprüche, **dadurch gekennzeichnet, dass** der Schenkel (40) des Schutzbleches (14) mit der Durchgangsbohrung (42) mit einem Griffansatz (52) ausgebildet ist.

9. Klemme nach einem der vorhergehenden Ansprüche, **dadurch gekennzeichnet, dass** an dem Klemmkörper (12) ein Halteelement angebracht oder angeformt ist.

10. Klemme nach einem der vorhergehenden Ansprüche, **dadurch gekennzeichnet, dass** die Mittelachse der Klemmschraube (16) im Bereich der Ausnehmung (28) angeordnet ist.

## Claims

1. Clamp (10) with a clamping body (12) for attachment to a bulb flat (32) with a channel-like recess (28) for receiving a bulb (30) of the bulb flat (32) and a rear wall (26) with a thread (34) in which a clamping bolt (16) engages, as well as a sheet metal protector (14) which is held on the clamping body (12) so as to be rotationally rigid and axially displaceable with respect to the longitudinal axis of the bolt, the sheet metal protector (14) projecting into the clamping path of the clamping bolt (16), **characterised in that** the sheet metal protector (14) is configured as a U-shaped sheet metal bracket, one leg (43) of which lies between the shank end (48) of the clamping bolt (16) and the bulb flat (32) and the other leg (40) of which has a through-bore (42) through which the bolt shank (44) projects.

2. Clamp according to claim 1, **characterised in that** the sheet metal protector (14) has, in the region of the pressure point of the bolt shank (44), an embossing (46) that points towards the bulb flat (32).

3. Clamp according to claim 1 or 2, **characterised in that** the sheet metal protector (14) is guided on the clamp body (12) parallel to the bolt shank (44).

4. Clamp according to any of the preceding claims, **characterised in that** the U-shaped sheet metal protector (14) has a central portion formed parallel to the bolt shank (44) and guided in a slot (36) in the rear wall (26) of the clamp body (12).

5. Clamp according to claim 4, **characterised in that** the slot (36) is formed as a laterally open, T-shaped recess in the rear wall (26) of the clamp body (12).

6. Clamp according to any of the preceding claims, **characterised in that** a preloaded compression spring (18) is provided which presses the sheet metal protector (14) against the bulb flat (32), even when the clamping bolt (16) is loosened.

7. Clamp according to claim 6, **characterised in that** the compression spring (18) is arranged between an underside of a head (50) of the clamping bolt (16) and the leg (40) of the sheet metal protector (14) with the through-bore (42).

8. Clamp according to any of the preceding claims, **characterised in that** the leg (40) of the sheet metal protector (14) with the through-bore (42) is configured with a handle formation (52).

9. Clamp according to any of the preceding claims, **characterised in that** a retaining element is attached to or formed on the clamp body (12).

10. Clamp according to any of the preceding claims, **characterised in that** the central axis of the clamping bolt (16) is arranged in the region of the recess (28).

## Revendications

1. Élément de serrage (10) avec un corps de serrage (12) pour le montage au niveau d'un acier plat à boudin (32) avec un évidement (28) de type rigole pour la réception d'un boudin (30) de l'acier plat à boudin (32) et une paroi arrière (26) avec un filet (34), dans lequel une vis de serrage (16) vient en prise, ainsi qu'une tôle de protection (14) qui est maintenue de manière rigide en rotation et mobile axialement par rapport à l'axe longitudinal de vis contre le corps de serrage (12), dans lequel la tôle de protection (14) dépasse dans la voie de serrage de la vis de serrage (16), **caractérisé en ce que** la tôle de protection (14) est réalisée comme angle de tôle en forme de U, dont une branche (43) se trouve entre l'extrémité de tige (48) de la vis de serrage (16) et l'acier plat à boudin (32) et dont l'autre branche (40) présente un perçage débouchant (42), à travers lequel la tige de vis (44) dépasse.

2. Élément de serrage selon la revendication 1, **caractérisé en ce que** la tôle de protection (14) présente dans la zone du point de pression de la tige de vis (44) une gravure (46) qui est dirigée vers l'acier plat à boudin (32).

3. Élément de serrage selon la revendication 1 ou 2, **caractérisé en ce que** la tôle de protection (14) est guidée au niveau du corps de serrage (12) parallèlement à la tige de vis (44).

4. Élément de serrage selon l'une quelconque des revendications précédentes, **caractérisé en ce que** la tôle de protection (14) en forme de U présente une section médiane qui est réalisée parallèlement à la tige de vis (44) et est guidée dans une fente (36) dans la paroi arrière (26) du corps de serrage (12).

5. Élément de serrage selon la revendication 4, **caractérisé en ce que** la fente (36) est réalisée comme évidement en forme de T, ouvert latéralement dans la paroi arrière (26) du corps de serrage (12).

6. Élément de serrage selon l'une quelconque des revendications précédentes, **caractérisé en ce qu'**un ressort de pression (18) précontraint est prévu, lequel presse la tôle de protection (14) également dans un état desserré de la vis de serrage (16) contre l'acier plat à boudin (32).

7. Élément de serrage selon la revendication 6, **caractérisé en ce que** le ressort de pression (18) est agencé entre un côté inférieur d'une tête (50) de la vis de serrage (16) et la branche (40) de la tôle de protection (14) avec le perçage débouchant (42).

8. Élément de serrage selon l'une quelconque des revendications précédentes, **caractérisé en ce que** la branche (40) de la tôle de protection (14) est réalisée avec le perçage débouchant (42) avec une saillie de préhension (52).

9. Élément de serrage selon l'une quelconque des revendications précédentes, **caractérisé en ce qu'**un élément de retenue est monté ou formé au niveau du corps de serrage (12).

10. Élément de serrage selon l'une quelconque des revendications précédentes, **caractérisé en ce que** l'axe médian de la vis de serrage (16) est agencé dans la zone de l'évidement (28).
